(19) Europäisches Patentamt
European Patent Office
Office européen des brevets

(11) **EP 4 741 803 A1**

(12) **EUROPEAN PATENT APPLICATION**

(43) Date of publication:
**13.05.2026 Bulletin 2026/20**

(21) Application number: **25198194.0**

(22) Date of filing: **26.08.2025**

(51) International Patent Classification (IPC):
**G01N 17/00** (2006.01)   **B01L 1/02** (2006.01)
**B64G 7/00** (2006.01)

(52) Cooperative Patent Classification (CPC):
**G01N 17/002; B01L 1/025; B64G 7/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.11.2024 CN 202411601887**

(71) Applicants:
• **China Building Materials Academy Co., Ltd.**
**Beijing 100024 (CN)**
• **China National Building Material Group Co., Ltd.**
**Beijing 100084 (CN)**

(72) Inventors:
• **ZHI, Xiao**
**Beijing, 100024 (CN)**

• **MA, Zhongcheng**
**Beijing, 100024 (CN)**
• **LIU, Yaojun**
**Beijing, 100024 (CN)**
• **WU, Hao**
**Beijing, 100024 (CN)**
• **GAO, Chunyong**
**Beijing, 100024 (CN)**
• **LIU, Yun**
**Beijing, 100024 (CN)**
• **GUO, Junhua**
**Beijing, 100024 (CN)**

(74) Representative: **Bryn Aarflot AS**
**Patent**
**Stortingsgata 8**
**0161 Oslo (NO)**

(54) **COMPREHENSIVE ENVIRONMENT SIMULATION TEST APPARATUS AND TEST METHOD**

(57) The present invention relates to the technical field of environmental testing, and discloses a comprehensive environment simulation test apparatus and a test method, the apparatus comprises a vacuum tank, a vacuum unit, a first temperature regulating mechanism, a second temperature regulating mechanism, and a control system, wherein a sealing door is provided at an opening of one end of the vacuum tank in an openable and closable manner; the vacuum unit is used for adjusting a vacuum degree inside the vacuum tank; the first temperature regulating mechanism is used for increasing an internal temperature of the vacuum tank; the second temperature regulating mechanism is used for reducing the internal temperature of the vacuum tank; a micro-low gravity environment simulation module is arranged in the vacuum tank, wherein the micro-low gravity environment simulation module is configured to drive a test sample to rotate around an axial direction and rotate around a first direction. The present invention realizes that the comprehensive environment for testing of a test sample in a space with alternating high/low temperature, different vacuum degrees and different micro-low gravity factors can be simulated in a single apparatus, thus saving cost and occupying less space.

FIG. 1

EP 4 741 803 A1

## Description

## TECHNICAL FIELD

The present invention relates to the technical field of environmental testing, and specifically relates to a comprehensive environmental simulation test apparatus and a test method.

## BACKGROUND

In recent years, with the increasing demand for space exploration and the continuous development of space technology, more and more inorganic non-metallic materials are applied in the construction of space bases. Therefore, more stringent requirements are put forward for various performance indicators of inorganic non-metallic materials subject to complex space environments. The comprehensive environment of alternating high/low temperature, vacuum, microgravity and other factors in space will significantly affect the solidification formability and structural service performance of inorganic non-metallic materials. Carrying out sufficient environmental simulation tests is the key technical link for evaluating the reliability and lifespan of inorganic non-metallic materials.

Traditional environmental test apparatuses have relatively single functions and few items that can be tested. When comprehensive environmental simulation tests are carried out on inorganic non-metallic materials, tests need to be carried out on multiple environmental test apparatuses, which is costly and occupies a large space. Therefore, there is an urgent need for a comprehensive environment simulation test apparatus suitable for testing inorganic non-metallic materials with low cost and small space occupation.

## SUMMARY

In view of this, the present invention provides a comprehensive environment simulation test apparatus and a test method to solve the problem that there is a lack of a comprehensive environment simulation test apparatus suitable for testing inorganic non-metallic materials with low cost and small space occupation.

According to a first aspect, the present invention provides a comprehensive environment simulation test apparatus that comprises:

a vacuum tank, wherein one end of the vacuum tank is provided with an opening, and a sealing door is provided at the opening in an openable and closable manner;
a vacuum unit for adjusting a vacuum degree inside the vacuum tank;
a first temperature regulating mechanism for increasing an internal temperature of the vacuum tank;
a second temperature regulating mechanism for reducing the internal temperature of the vacuum tank;
a micro-low gravity environment simulation module arranged in the vacuum tank, wherein the micro-low gravity environment simulation module is configured to carry a test sample and drive the test sample to rotate around an axial direction and rotate around a first direction, the first direction and the axial direction are perpendicular to each other and located in the same horizontal plane;
a control system electrically connected to the vacuum unit, the first temperature regulating mechanism, the second temperature regulating mechanism, and the micro-low gravity environment simulation module.

The comprehensive environment simulation test apparatus according to the present invention has at least the following beneficial effects:

By integrating the vacuum unit, the first temperature regulating mechanism, the second temperature regulating mechanism and the vacuum tank in a single apparatus, and arranging a micro-low gravity environment simulation module in the vacuum tank, when the structural service performance of the test sample is tested, the inorganic non-metallic material can be fixed onto the micro-low gravity environment simulation module, and the micro-low gravity environment simulation module can drive the inorganic non-metallic material to rotate around the axial direction at a first standard rotational speed while driving the test sample to rotate around the first direction at a second standard rotational speed. The resultant vector of rotational speed synthesized by the first standard rotational speed and the second standard rotational speed makes the acceleration vector that the test sample is subjected to have a magnitude less than the gravity acceleration. The magnitude of the acceleration vector that the test sample is subjected to can be changed by changing the first standard rotational speed and the second standard rotational speed, thereby realizing the simulation of more micro-low gravity environments, meeting the test requirements for different space environments, and improving the applicability of the test. Moreover, in the process of keeping the test sample placed in the required micro-low gravity environment, not only can the vacuum degree inside the vacuum tank be adjusted by the vacuum unit, but also the internal temperature of the vacuum tank can be adjusted by the first temperature regulating mechanism and the second temperature regulating mechanism cooperatively, so that the comprehensive environment for testing of a test sample in a space with alternating high/low temperature, different vacuum degrees and different micro-low gravity factors can be simulated in a single apparatus, thus saving cost and occupying less space.

In an optional embodiment, a wall thickness of the vacuum tank is 1.2 times a first calculated wall thickness, and the first calculated wall thickness satisfies the following formula:

$$S_1 = 1.25 D_B \left( \frac{P}{E} \cdot \frac{L}{D_B} \right)^{0.4}$$

where $S_1$ is the first calculated wall thickness, $D_B$ is an inner diameter of the vacuum tank, P is a designed external pressure of the vacuum tank, E is an elastic modulus of the material of the vacuum tank, and L is a calculated length of the vacuum tank.

In an optional embodiment, the sealing door is provided as an elliptical sealing head, wherein one end of the sealing door in a closed state facing the vacuum tank is provided as a cylindrical straight section, and the other end of the sealing door is provided as a revolving elliptical surface, and a wall thickness of the sealing door is 1.84 times a second calculated wall thickness, and the second calculated wall thickness satisfies the following formula:

$$S_2 = \frac{1.7 P D_c}{4 [\sigma] \gamma - P} \cdot \frac{D_c}{2 h_c} + C$$

where $S_2$ is the second calculated wall thickness, P is the designed external pressure of the vacuum tank, $D_c$ is an inner diameter of the cylindrical straight section, $[\sigma]$ is an allowable stress of the material of the sealing door, $\gamma$ is a weld coefficient, $h_c$ is an inner edge height of a protruding part of the sealing door, and C is a constant.

In an optional embodiment, the inner wall of the vacuum tank is provided with a plurality of reinforcing ribs at intervals in the axial direction, and each of the reinforcing ribs is arranged along a circumference of the inner wall of the vacuum tank.

In an optional embodiment, the micro-low gravity environment simulation module comprises a first frame, a second frame is rotatably connected to the first frame, and the second frame is configured to be driven to rotate around the axial direction by a first driving assembly; a clamping member is rotatably connected to the second frame, the clamping member is configured to be driven to rotate around the first direction by a second driving assembly, and the clamping member is configured to clamp and fix the test sample.

In an optional embodiment, the first driving assembly comprises a first motor arranged along a second direction on the first frame, an output end of the first motor is connected with a first worm gear reducer, and an output end of the first worm gear reducer is coaxially connected to the second frame; any two of the axial direction, the first direction and the second direction are perpendicular to each other;

and/or the second driving assembly comprises a second motor arranged along a second direction on the second frame, an output end of the second motor is connected with a second worm gear reducer, and an output end of the second worm gear reducer is coaxially connected to the clamping member; any two of the axial direction, the first direction and the second direction are perpendicular to each other.

In an optional embodiment, the second frame is provided with a first speed sensor, and the first speed sensor is configured to detect a speed of rotation of the second frame around the axial direction to obtain a first speed and transmit the first speed to the control system; the control system is configured to compare the first speed with a first standard rotational speed to obtain a first offset value, correct a working power of the first driving assembly according to the first offset value, and control the rotation of the first driving assembly according to the corrected working power of the first driving assembly; the clamping member is provided with a second speed sensor configured to detect a speed of rotation of the clamping member around the first direction to obtain a second speed and transmit the second speed to the control system; the control system is configured to compare the second speed with a second standard rotational speed to obtain a second offset value, correct a working power of the second driving assembly according to the second offset value, and control the rotation of the second driving assembly according to the corrected working power of the second driving assembly;

and/or the apparatus further comprises a force sensor configured to detect a first gravity value that the test sample is subjected to and transmit the first gravity value to the control system; the control system is configured to compare the first gravity value with a standard micro-low gravity value to obtain a gravity offset value, perform decomposition calculation to obtain a first component compensation rotational speed around the axial direction and a second component compensation rotational speed around the first direction according to the gravity offset value, correct a working power of the first driving assembly according to the first component compensation rotational speed, control the rotation of the first driving assembly according to the corrected working power of the first driving assembly, correct a working power of the second driving assembly according to the second component compensation rotational speed, and control the rotation of the second driving assembly according to the corrected working power of the second driving assembly.

In an optional embodiment, the first temperature regulating mechanism comprises an infrared thermal cage circumferentially arranged in the vacuum tank, and the micro-low gravity environment simulation module is arranged in the infrared thermal cage;

and/or the second temperature regulating mechanism comprises a first heat sink module, a second heat sink module, and a liquid nitrogen module, wherein the first heat sink module is arranged on a surrounding wall of the vacuum tank, the liquid nitrogen module is connected to a first pipeline of the first heat sink module and is configured to supply liquid nitrogen to the first pipeline; the second heat sink module is arranged on the sealing door, the liquid nitrogen module is connected to a second pipeline of the second heat sink module and is configured to supply liquid nitrogen to the second pipeline.

In an optional embodiment, the comprehensive environment simulation test apparatus further comprises a cabinet, wherein the vacuum unit is arranged in the cabinet, one end of the cabinet along the axial direction is provided with a protruding base, the vacuum tank is arranged on top of the base, and the projection of the vacuum tank in the axial direction falls within the range of the cabinet;

and/or the vacuum unit comprises a vacuum pump in communication with the interior of the vacuum tank through a third pipeline.

According to a second aspect, the present invention also provides a test method applied to the test apparatus provided in the first aspect above, wherein the test method comprises the following steps:

> installing and fixing the test sample to be tested onto the micro-low gravity environment simulation module and closing the sealing door;
> inputting a standard temperature value, a standard vacuum degree and a standard micro-low gravity acceleration value required for a test into the control system;
> adjusting a test temperature inside the vacuum tank by the first temperature regulating mechanism or the second temperature regulating mechanism according to the standard temperature value;
> adjusting an internal vacuum degree of the vacuum tank by the vacuum unit according to the standard vacuum degree;
> driving the test sample to rotate around the axial direction at a first standard rotational speed and driving the test sample made of inorganic non-metallic material to rotate around the first direction at a second standard rotational speed by the micro-low gravity environment simulation module according to the standard micro-low gravity acceleration value.

The test method according to the present invention has at least the following beneficial effects:
By integrating the vacuum unit, the first temperature regulating mechanism, the second temperature regulating mechanism and the vacuum tank in a single apparatus, and arranging a micro-low gravity environment simulation module in the vacuum tank, when the structural service performance of the test sample is tested, by firstly inputting the standard temperature value, standard vacuum degree and standard micro-low gravity acceleration value required for the test into the control system, the control system can control the micro-low gravity environment simulation module to drive the test sample to rotate around the axial direction at the first standard rotational speed while driving the test sample to rotate around the first direction at the second standard rotational speed according to the standard micro-low gravity acceleration value. The resultant vector of rotational speed synthesized by the first standard rotational speed and the second standard rotational speed makes the acceleration vector that the test sample is subjected to (i.e., the standard micro-low gravity acceleration value) have a magnitude less than the gravity acceleration. The magnitude of the acceleration vector that the test sample is subjected to can be changed by changing the first standard rotational speed and the second standard rotational speed, thereby realizing the simulation of more micro-low gravity environments, meeting the test requirements for different space environments, and improving the applicability of the test. Moreover, in the process of keeping the test sample placed in the required micro-low gravity environment, not only can the vacuum degree inside the vacuum tank be adjusted by the vacuum unit according to different input standard vacuum degrees, but also the internal temperature of the vacuum tank can be adjusted by the first temperature regulating mechanism and the second temperature regulating mechanism cooperatively according to different input standard temperature values, so that the comprehensive environment for testing of a test sample in a space with alternating high/low temperature, different vacuum degrees and different micro-low gravity factors can be simulated in a single apparatus, thus saving cost and occupying less space.

## BRIEF DESCRIPTION OF DRAWINGS

In order to more clearly illustrate the technical solutions in the specific implementation ways of the present invention or in the prior art, the drawings that are needed for describing the specific implementation ways or the prior art are briefly introduced below. Apparently, the drawings described below only represent some implementation ways of the present invention, and those skilled in the art can obtain other drawings from these drawings without creative efforts.

> FIG. 1 is a three-dimensional structural schematic diagram of a comprehensive environment simulation test apparatus according to an embodiment of the present invention;
> FIG. 2 is a partial structural schematic diagram of the sealing door of FIG. 1 in a closed state;
> FIG. 3 is a partial cross-sectional structural schematic diagram of an embodiment of the present invention;
> FIG. 4 is a partial structural schematic diagram of an embodiment of the present invention;
> FIG. 5 is a three-dimensional structural schematic diagram of the micro-low gravity environment simulation module according to an embodiment of the present invention;
> FIG. 6 is an exploded structural schematic diagram of FIG. 5;
> FIG. 7 is a cross-sectional schematic diagram of the reinforcing rib according to an embodiment of the present invention;

Reference numerals:

> 100-vacuum tank, 110-sealing door, 111-observation window, 120-reinforcing rib;
> 200-micro-low gravity environment simulation module, 210-first frame, 211-U-shaped groove, 220-second frame, 230-clamping member, 241-first motor, 242-first worm gear reducer, 251-second motor, 252-second worm gear reducer;
> 310-first heat sink module, 320-second heat sink module;
> 410-infrared thermal cage;
> 500-cabinet, 510-base.

## DETAILED DESCRIPTION

In order to make the purpose, technical solutions, and advantages of the embodiments of the present invention clearer, the technical solutions in the embodiments of the present invention will be clearly and completely described below with reference to the accompanying drawings in the embodiments of the present invention, and it is apparent that the described embodiments are part of the embodiments of the present invention, but not all of the embodiments. Based on the embodiments described in the present invention, all other embodiments obtainable by those skilled in the art without creative work fall within the scope of protection of the present invention.

In the description of the embodiments, it should be noted that the terms such as "center", "upper", "lower", "left", "right", "perpendicular", "horizontal", "inside", "outside" indicate orientations or positional relationships based on those shown in the drawings, and are only for convenience of describing the embodiments and simplifying the description, rather than indicating or implying that the device or element referred to must have a specific orientation, or must be constructed and operated in a specific orientation. Therefore, they should not be construed as limiting the embodiments. Additionally, terms "first", "second", and "third" are used for descriptive purposes only and should not be construed as indicating or implying relative importance.

In the description of the embodiments, it should be noted that unless otherwise clearly specified and defined, the terms "installation", "connect with" and "connect to" should be understood in a broad sense. For example, they may refer to a fixed connection, a detachable connection, or an integral connection; they may refer to a mechanical connection or an electrical connection; they may be directly connected or indirectly connected through an intermediate medium; they may be an internal communication between two elements. Those of ordinary skill in the art can understand the specific meanings of the above terms in the embodiments according to specific circumstances.

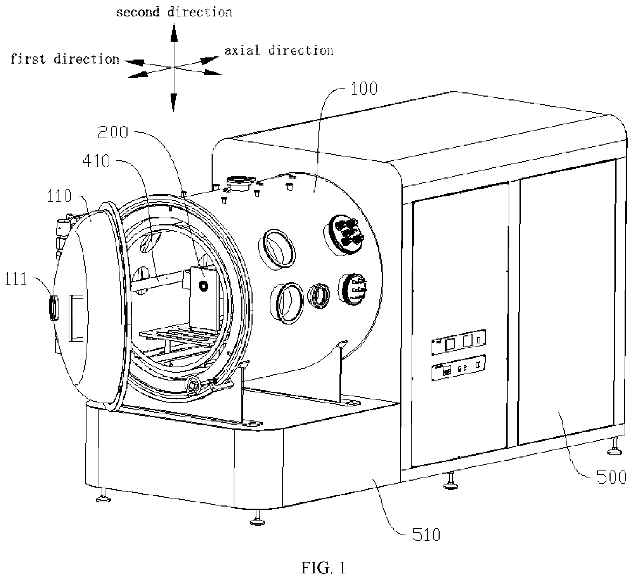

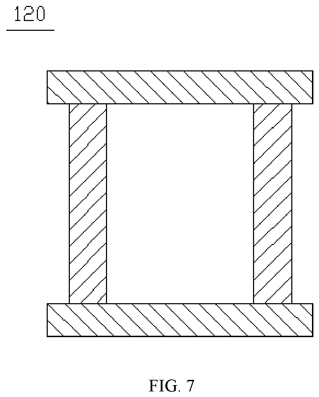

The embodiments of the present invention will be described below with reference to FIGS. 1 to 7.

According to a first aspect of the embodiments of the present invention, a comprehensive environment simulation test apparatus is provided and comprises a vacuum tank 100, a vacuum unit, a first temperature regulating mechanism, a second temperature regulating mechanism, and a control system; wherein one end of the vacuum tank 100 is provided with an opening, and a sealing door 110 is provided at the opening in an openable and closable manner; the vacuum unit is used for adjusting a vacuum degree inside the vacuum tank 100; the first temperature regulating mechanism is used for increasing an internal temperature of the vacuum tank 100; the second temperature regulating mechanism is used for reducing the internal temperature of the vacuum tank 100; a micro-low gravity environment simulation module 200 is arranged in the vacuum tank 100, wherein the micro-low gravity environment simulation module 200 is configured to carry a test sample that is preferably made of inorganic non-metallic material in the present embodiment and drive the test sample made of inorganic non-metallic material to rotate around an axial direction and rotate around a first direction, the first direction and the axial direction are perpendicular to each other and located in the same horizontal plane; the control system is electrically connected to the vacuum unit, the first temperature regulating mechanism, the second temperature regulating mechanism, and the micro-low gravity environment simulation module 200. It can be understood that the axial direction, the first direction, and the second direction described herein refer to the axial direction, the first direction, and the second direction shown in FIG. 1, and any two of the axial direction, the first direction, and the second direction are perpendicular to each other, and the axial direction refers to the direction of the axis of the vacuum tank 100, and the first direction and the axial direction are located in the same horizontal plane.

According to the test apparatus of the present embodiment, by integrating the vacuum unit, the first temperature regulating mechanism, the second temperature regulating mechanism and the vacuum tank 100 in a single apparatus, and arranging a micro-low gravity environment simulation module 200 in the vacuum tank 100, when the structural service performance of the test sample made of inorganic non-metallic material is tested, the test sample made of inorganic non-metallic material can be fixed onto the micro-low gravity environment simulation module 200, and the micro-low gravity environment simulation module 200 can drive the test sample made of inorganic non-metallic material to rotate around the axial direction at a first standard rotational speed while driving the test sample made of inorganic non-metallic material to rotate around the first direction at a second standard rotational speed. The resultant vector of rotational speed synthesized by the first standard rotational speed and the second standard rotational speed makes the acceleration vector that the test sample made of inorganic non-metallic material is subjected to have a magnitude less than the gravity acceleration. The magnitude of the acceleration vector that the test sample made of inorganic non-metallic material is subjected to can be changed by changing the first standard rotational speed and the second standard rotational speed, thereby realizing the simulation of more micro-low gravity environments, meeting the test requirements for different space environments, and improving the applicability of the test. Moreover, in the process of keeping the test sample made of inorganic non-metallic material placed in the required micro-low gravity environment, not only can the vacuum degree inside the vacuum tank 100 be adjusted by the vacuum unit, but also the internal temperature of the vacuum tank 100 can be adjusted by the first temperature regulating mechanism and the second temperature regulating mechanism cooperatively, so that the comprehensive environment for testing of the test sample made of inorganic non-metallic material in a space with alternating high/low temperature, different vacuum degrees and different micro-low gravity factors can be simulated in a single apparatus, thus saving cost and occupying less space.

It should be noted that, in a specific application scenario, the vacuum unit, the first temperature regulating mechanism, the second temperature regulating mechanism, and the micro-low gravity environment simulation module 200 of the present embodiment can be selected so that one of them or part of them are used to meet different test requirements, for example, only the vacuum unit and the first temperature regulating mechanism are started to simulate a comprehensive environment for testing of the test sample made of inorganic non-metallic material in a space with high vacuum degree and high temperature; or only the vacuum unit and the second temperature regulating mechanism are started to simulate a comprehensive environment for testing of the test sample made of inorganic non-metallic material in a space with high vacuum degree and low temperature.

It should be noted that during the process of the test sample made of inorganic non-metallic material rotating around the axial direction and rotating around the first direction, a centrifugal force will be generated for each direction respectively. The two centrifugal forces are in directions that can both be opposite to that of the universal gravity generated by the earth, so the two centrifugal forces can counteract part of the gravity in the corresponding directions; therefore, the resultant vector of rotational speed synthesized by the first standard rotational speed and the second standard rotational speed makes the acceleration vector that the test sample made of inorganic non-metallic material is subjected to have a magnitude less than the gravity acceleration.

Specifically, the end surface of the vacuum tank 100 facing the sealing door 110 in the closed state along the axial direction is provided with a threaded hole, and a locking screw is screwed on the sealing door 110, and the locking screw is matched with the threaded hole; when the sealing door 110 is in the closed state, the locking screw is aligned with the threaded hole in the axial direction, and the locking screw is screwed into the threaded hole, so as to realize the sealing of the opening of the vacuum tank 100 and ensure the accuracy of the test.

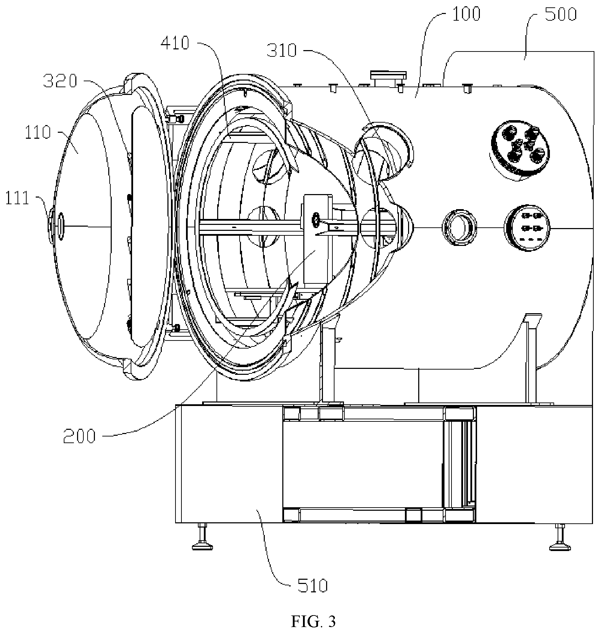

As shown in FIGS. 1 and 3, specifically, the sealing door 110 is provided with an observation window 111 so that the tester can observe the test sample made of inorganic non-metallic material inside the vacuum tank 100 during the test.

In some embodiments, a wall thickness of the vacuum tank 100 is 1.2 times a first calculated wall thickness, and the first calculated wall thickness satisfies the following formula:

$$S_1 = 1.25 D_B \left( \frac{P}{E} \cdot \frac{L}{D_B} \right)^{0.4}$$

where $S_1$ is the first calculated wall thickness, $D_B$ is an inner diameter of the vacuum tank 100, P is a designed external pressure of the vacuum tank 100, specifically, P is selected to be 0.1Mpa in the present embodiment, E is an elastic modulus of the material of the vacuum tank 100, and L is a calculated length of the vacuum tank 100; the wall thickness of the vacuum tank 100 is obtained by increasing the first calculated wall thickness by 1.2 times, which can fully consider the influence caused by the steel plate manufacture deviation, the shape-forming thinning amount, and the polishing thinning amount, and reduce the thickness of the vacuum tank 100 on the basis of satisfying the requirements of the comprehensive environment simulation test of the test sample made of inorganic non-metallic material, so as to expand the internal effective volume of the vacuum tank 100 without increasing the overall size of the vacuum tank 100, thereby effectively reducing the manufacturing cost of the test apparatus of the present embodiment and reducing the occupied space of the test apparatus of the present embodiment.

In some embodiments, the sealing door 110 is provided as an elliptical sealing head, wherein one end of the sealing door 110 in a closed state facing the vacuum tank 100 is provided as a cylindrical straight section, and the other end of the sealing door 110 is provided as a revolving elliptical surface, and a wall thickness of the sealing door 110 is 1.84 times a second calculated wall thickness, and the second calculated wall thickness satisfies the following formula:

$$S_2 = \frac{1.7 P D_c}{4 [\sigma] \gamma - P} \cdot \frac{D_c}{2 h_c} + C$$

where $S_2$ is the second calculated wall thickness, P is the designed external pressure of the vacuum tank 100, P is selected to be 0.1Mpa in the present embodiment, $D_c$ is an inner diameter of the cylindrical straight section, $[\sigma]$ is an allowable stress of the material of the sealing door 110, the material of the sealing door 110 in the present embodiment is selected to be 0Cr18Ni9, so [σ] is selected to be 90MPa; γ is a weld coefficient, γ is selected to be 0.6 in the present embodiment; $h_c$ is an inner edge height of a protruding part of the sealing door 110, and C is a constant, which is specifically 0.760346; the wall thickness of the sealing door 110 is obtained by increasing the second calculated wall thickness by 1.84 times, which can fully consider the influence caused by the steel plate manufacture deviation and the stamping thinning amount of the sealing head, and reduce the thickness of the sealing door 110 on the basis of satisfying the requirements of the comprehensive environment simulation test of the test sample made of inorganic non-metallic material, so as to expand the internal effective volume of the vacuum tank 100 without increasing the overall size of the vacuum tank 100, thereby effectively reducing the manufacturing cost of the test apparatus of the present embodiment and reducing the occupied space of the test apparatus of the present embodiment.

In a specific application scenario, an opposite end of the vacuum tank 100 away from the sealing door 110 along the axial direction has a first elliptical sealing head welded and fixed thereon, and the wall thickness of the first elliptical sealing head is 1.84 times the second calculated wall thickness.

In some embodiments, the inner wall of the vacuum tank 100 is provided with a plurality of reinforcing ribs 120 at intervals in the axial direction, and each of the reinforcing ribs 120 is arranged along a circumference of the inner wall of the vacuum tank. The rigidity of the cylindrical vacuum tank 100 is increased by the reinforcing ribs 120, so as to effectively prevent instability of the vacuum tank 100 on the basis of reducing the wall thickness of the vacuum tank 100, and increase the allowable external pressure for the vacuum tank 100.

Specifically, the cross-sectional inertia moment of each of the reinforcing ribs 120 is greater than a cross-sectional calculated inertia moment, and the cross-sectional calculated inertia moment is calculated by the following steps:

Firstly, a coefficient B is calculated by the following formula:

$$B = \frac{PD_H}{S_1 + \dfrac{A}{L}}$$

where P is the designed external pressure of the vacuum tank 100, $D_H$ is the outer diameter of the vacuum tank 100, $S_1$ is the first calculated wall thickness, A is the cross-sectional area of the reinforcing rib 120, L is the calculated length of the vacuum tank 100, and B is the coefficient;

According to the value of coefficient B calculated by the above formula and a designed temperature, the value of ε is obtained by looking up a corresponding value from a look-up table, and the cross-section calculated inertia moment is calculated by the following formula:

$$I_s = \frac{D_H^2 L \left(S_1 + \dfrac{A}{L}\right)}{14} \varepsilon$$

where, ε is a strain of the vacuum tank 100, $D_H$ is the outer diameter of the vacuum tank 100, $S_1$ is the first calculated wall thickness, A is the cross-sectional area of the reinforcing rib 120, and L is the calculated length of the vacuum tank 100. By ensuring that the cross-sectional inertia moment of the reinforcing rib 120 is greater than the cross-sectional calculated inertia moment, the rigidity of the cylindrical vacuum tank 100 is sufficiently increased by the reinforcing ribs 120, so as to ensure that instability of the vacuum tank 100 is effectively prevented on the basis of reducing the wall thickness of the vacuum tank 100, and increase both the allowable external pressure and the internal effective volume of the vacuum tank 100.

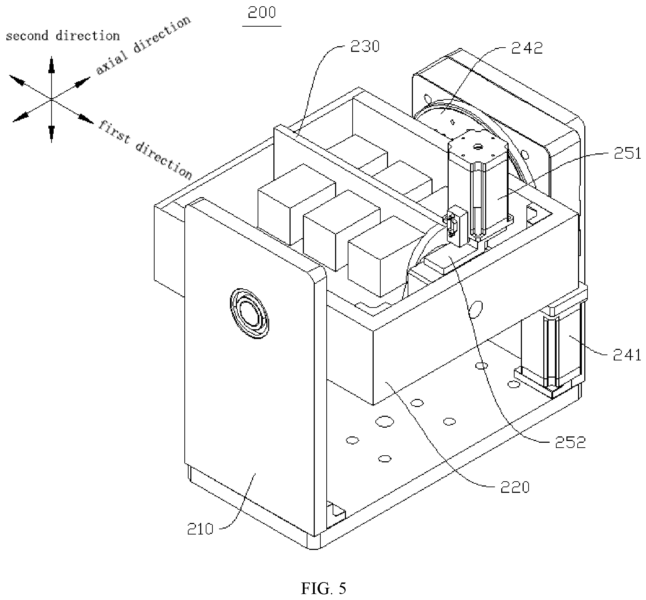

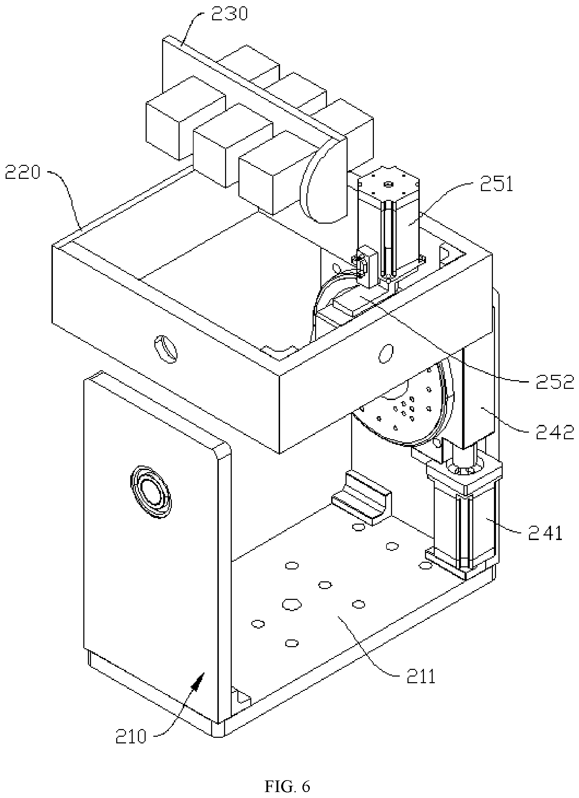

As shown in FIGS. 5 and 6, in some embodiments, the micro-low gravity environment simulation module 200 comprises a first frame 210, a second frame 220 is rotatably connected to the first frame 210, and the second frame 220 is configured to be driven to rotate around the axial direction by a first driving assembly; a clamping member 230 is rotatably connected to the second frame 220, the clamping member 230 is configured to be driven to rotate around the first direction by a second driving assembly, and the clamping member 230 is configured to clamp and fix the test sample made of inorganic non-metallic material. The test sample made of inorganic non-metallic material is fixed to the clamping member 230 by clamping, which effectively prevents it from detaching from the clamping member 230 in the process of driving the test sample made of inorganic non-metallic material to rotate around the axial direction and rotate around the first direction; at the same time, the first driving assembly and the second driving assembly respectively drive the test sample made of inorganic non-metallic material to rotate around the axial direction and rotate around the first direction, so that the power sources of the two rotational motions are independent of each other, so as to be able to selectively change one of the magnitude of the first standard rotational speed of rotating around the axial direction and the magnitude of the second standard rotational speed of rotating around the first direction, thereby more flexibly simulating more micro-low gravity environments. At the same time, the micro-low gravity environment simulation module 200 of the present embodiment simulates a micro-low gravity environment by the mechanical rotation method, which satisfies the requirement for carrying out and implementing the micro-low gravity environment simulation test in the vacuum tank 100 under conditions of heating and vacuum.

Specifically, the first driving assembly comprises a first motor 241 arranged along a second direction on the first frame 210, an output end of the first motor 241 is connected with a first worm gear reducer 242, and an output end of the first worm gear reducer 242 is coaxially connected to the second frame 220. By arranging the first motor 241 along the second direction, the size of the first driving assembly along the axial direction is reduced, thereby reducing the size of the micro-low gravity environment simulation module 200 along the axial direction, and thus effectively reducing the occupied space of the test apparatus of the present embodiment.

Specifically, the upper end of the first frame 210 along the second direction is provided with a U-shaped groove 211, the second frame 220 is rotatably connected to the U-shaped groove 211, and the first motor 241 is located at the lower end of the first worm gear reducer 242 along the second direction; by embedding the second frame 220 and the first motor 241 in the U-shaped groove 211, the space occupied by the micro-low gravity environment simulation module 200 inside the vacuum tank 100 can be more effectively reduced, and thus the test apparatus of the present embodiment can be more miniaturized.

Specifically, the second driving assembly comprises a second motor 251 arranged along a second direction on the second frame 220, an output end of the second motor 251 is connected with a second worm gear reducer 252, and an output end of the second worm gear reducer 252 is coaxially connected to the clamping member 230. By arranging the second motor 251 along the second direction, the size of the second driving assembly along the first direction is reduced, thereby reducing the size of the micro-low gravity environment simulation module 200 along the first direction, and thus effectively reducing the occupied space of the test apparatus of the present embodiment.

In some embodiments, the second frame 220 is provided with a first speed sensor, and the first speed sensor is configured to detect a speed of rotation of the second frame 220 around the axial direction to obtain a first speed and transmit the first speed to the control system; the control system is configured to compare the first speed with a first standard rotational speed to obtain a first offset value, correct a working power of the first driving assembly according to the first offset value, and control the rotation of the first driving assembly according to the corrected working power of the first driving assembly to ensure that the second frame 220 rotates around the axial direction accurately at the first standard rotational speed; the clamping member 230 is provided with a second speed sensor configured to detect a speed of rotation of the clamping member 230 around the first direction to obtain a second speed and transmit the second speed to the control system; the control system is configured to compare the second speed with a second standard rotational speed to obtain a second offset value, correct a working power of the second driving assembly according to the second offset value, and control the rotation of the second driving assembly according to the corrected working power of the second driving assembly to ensure that the clamping member 230 rotates around the first direction accurately at the second standard rotational speed; thus it is ensured that the test sample made of inorganic non-metallic material rotates around the axial direction accurately at the first standard rotational speed and rotates around the first direction at the second standard rotational speed for a long time, thereby ensuring that the test sample made of inorganic non-metallic material is kept in the required micro-low gravity environment for a long time for testing, and ensuring the accuracy of the testing.

It should be noted that when the second frame 220 rotates around the axial direction at the first standard rotational speed, the first offset value is zero, that is, there is no need to correct the working power of the first driving assembly. When the clamping member 230 rotates around the first direction at the second standard rotational speed, the second offset value is zero, that is, there is no need to correct the working power of the second driving assembly.

Specifically, the first standard rotational speed refers to a component rotational speed of the test sample made of inorganic non-metallic material around the axial direction when the centrifugal force generated during the rotation of the test sample made of inorganic non-metallic material counteracts part of the gravity generated by the Earth's gravity acceleration of $9.80m/s^2$ so that the test sample made of inorganic non-metallic material is under the required micro-low gravity environment condition (i.e., subject to the standard micro-low gravity acceleration value required for the test); the second standard rotational speed refers to a component rotational speed of the test sample made of inorganic non-metallic material around the first direction when the centrifugal force generated during the rotation of the test sample made of inorganic non-metallic material counteracts part of the gravity generated by the Earth's gravity acceleration of $9.80m/s^2$ so that the test sample made of inorganic non-metallic material is under the required micro-low gravity environment condition (i.e., subject to the standard micro-low gravity acceleration value required for the test);

It can be understood that the first standard rotational speed and the second standard rotational speed are obtained in the following way: comparing the Earth's gravity acceleration to the standard micro-low gravity acceleration to obtain a total acceleration to be generated during the rotational motion of the test sample made of inorganic non-metallic material around the axial direction and around the first direction, and performing decomposition calculation to obtain the first standard rotational speed around the axial direction and the second standard rotational speed around the first direction according to the total acceleration to be generated, a rotation radius of the test sample made of inorganic non-metallic material rotating around the axial direction and a rotation radius of the test sample made of inorganic non-metallic material rotating around the first direction.

Considering that the Earth's gravity acceleration in the area where the test is conducted may not be $9.80m/s^2$ due to the influence of factors such as different latitudes, longitudes, and altitudes, this results in the situation where the test sample made of inorganic non-metallic material, when rotating around the axial direction at the first standard rotational speed and rotating around the first direction at the second standard rotational speed, still cannot be subjected to the standard micro-low gravity acceleration value required for the test. To solve the above problem, specifically, the test apparatus further comprises a force sensor configured to detect a first gravity value that the test sample made of inorganic non-metallic material is subjected to and transmit the first gravity value to the control system; the control system is configured to compare the first gravity value with a standard micro-low gravity value to obtain a gravity offset value, perform decomposition calculation to obtain a first component compensation rotational speed around the axial direction and a second component compensation rotational speed around the first direction according to the gravity offset value, correct a working power of the first driving assembly according to the first component compensation rotational speed, control the rotation of the first driving assembly according to the corrected working power of the first driving assembly, correct a working power of the second driving assembly according to the second component compensation rotational speed, and control the rotation of the second driving assembly according to the corrected working power of the second driving assembly; in this way, both the first standard rotational speed and the second standard rotational speed can be compensated according to external factors, so as to ensure that the test sample made of inorganic non-metallic material is accurately kept in the required micro-low gravity environment for a long time for testing, and ensure the accuracy of the testing.

It should be noted that, when the first gravity value is the same as the standard micro-low gravity value, the gravity offset value is zero.

Specifically, the standard micro-low gravity value refers to the gravity generated when the test sample made of inorganic non-metallic material is subjected to the standard micro-low gravity acceleration required for the test.

Specifically, the control system is provided with a display, and the display can display the first speed detected by the first speed sensor, the second speed detected by the second speed sensor, and the first gravity value detected by the force sensor, so that the tester can intuitively monitor them.

It can be understood that the step of performing decomposition calculation to obtain a first component compensation rotational speed around the axial direction and a second component compensation rotational speed around the first direction according to the gravity offset value is done in the following way: obtaining an acceleration offset value according to the gravity offset value and the weight of the test sample made of inorganic non-metallic material, and performing decomposition calculation to obtain the first component compensation rotational speed around the axial direction and the second component compensation rotational speed around the first direction according to the acceleration offset value, a rotation radius of the test sample made of inorganic non-metallic material rotating around the axial direction and a rotation radius of the test sample made of inorganic non-metallic material rotating around the first direction.

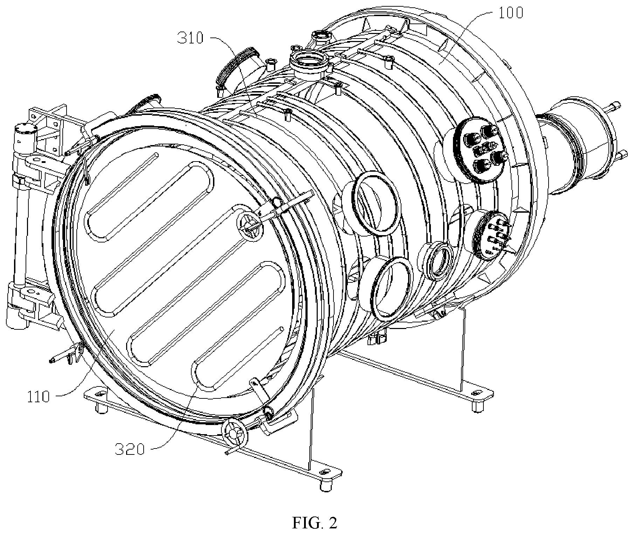

As shown in FIGS. 2 and 3, in some embodiments, the second temperature regulating mechanism comprises a first heat sink module 310, a second heat sink module 320, and a liquid nitrogen module, wherein the first heat sink module 310 is arranged on a surrounding wall of the vacuum tank 100, the liquid nitrogen module is connected to a first pipeline of the first heat sink module 310 and is configured to supply liquid nitrogen to the first pipeline; the second heat sink module 320 is arranged on the sealing door 110, the liquid nitrogen module is connected to a second pipeline of the second heat sink module 320 and is configured to supply liquid nitrogen to the second pipeline. By simultaneously supplying liquid nitrogen to the first pipeline of the first heat sink module 310 and the second pipeline of the second heat sink module 320 for heat exchange and cooling, various positions inside the vacuum tank 100 are uniformly cooled, so that the temperature of all positions inside the vacuum tank 100 is basically the same, and a "cold" background environment is better simulated inside the vacuum tank 100, thereby improving the accuracy of detection for the testing.

Specifically, the output end of the liquid nitrogen module is provided with a liquid nitrogen valve.

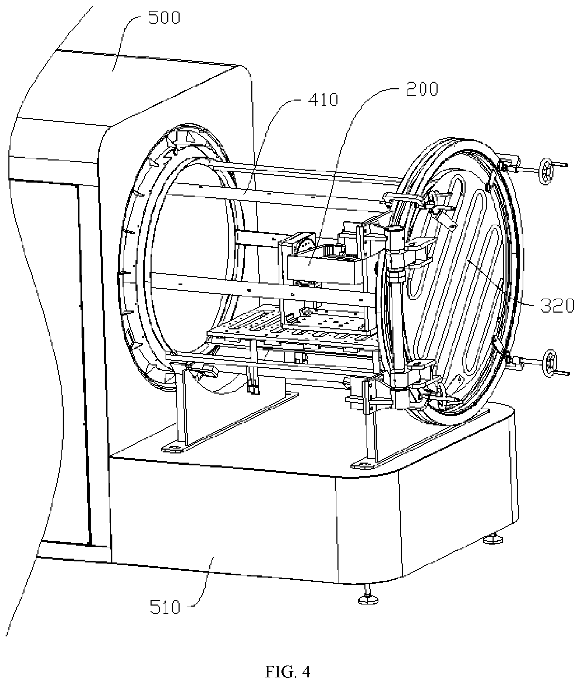

As shown in FIGS. 3 and 4, in some embodiments, the first temperature regulating mechanism comprises an infrared thermal cage 410 circumferentially arranged in the vacuum tank 100, and the micro-low gravity environment simulation module 200 is arranged in the infrared thermal cage 410. By turning on the infrared thermal cage 410, infrared radiation heating is generated at various positions along the circumferential direction of the vacuum tank 100, so that various positions inside the vacuum tank 100 are uniformly heated, and a "hot" background environment is better simulated inside the vacuum tank 100, thereby improving the accuracy of detection for the testing.

As shown in FIGS. 1 and 4, in some embodiments, the test apparatus further comprises a cabinet 500, wherein the vacuum unit is arranged in the cabinet 500, one end of the cabinet 500 along the axial direction is provided with a protruding base 510, the vacuum tank 100 is arranged on top of the base 510, and the projection of the vacuum tank 100 in the axial direction falls within the range of the cabinet 500. By arranging the vacuum tank 100 and the vacuum unit outside and inside the cabinet 500 respectively, the occupied space of the test apparatus of the present embodiment is further reduced on the basis of satisfying the control requirement of the vacuum degree inside the vacuum tank 100, and thus the test apparatus of the present embodiment can be made more miniaturized.

Specifically, the vacuum unit comprises a vacuum pump in communication with the interior of the vacuum tank 100 through a third pipeline. The vacuum pump is selectively started according to the requirement for the vacuum degree in the vacuum tank 100, so as to provide an air suction device for obtaining the required vacuum degree in the vacuum tank 100. More specifically, the present embodiment also measures the vacuum degree in the chamber of the vacuum tank by a vacuum measurement assembly, and controls the operation of the vacuum pump according to the vacuum degree measured in real time.

According to a second aspect of the embodiments of the present invention, a test method is provided, wherein the test method is applied to the comprehensive environment simulation test apparatus for inorganic non-metallic materials according to the first aspect of the embodiments of the present invention, wherein the test method comprises the following steps:

installing and fixing the test sample made of inorganic non-metallic material to be tested onto the micro-low gravity environment simulation module 200 and closing the sealing door 110;
inputting a standard temperature value, a standard vacuum degree and a standard micro-low gravity acceleration value required for a test into the control system;
adjusting a test temperature inside the vacuum tank 100 by the first temperature regulating mechanism or the second temperature regulating mechanism according to the standard temperature value;
adjusting an internal vacuum degree of the vacuum tank 100 by the vacuum unit according to the standard vacuum degree;
driving the test sample made of inorganic non-metallic material to rotate around the axial direction at a first standard rotational speed and driving the test sample made of inorganic non-metallic material to rotate around the first direction at a second standard rotational speed by the micro-low gravity environment simulation module 200 according to the standard micro-low gravity acceleration value.

According to the test method of the present embodiment, by integrating the vacuum unit, the first temperature regulating mechanism, the second temperature regulating mechanism and the vacuum tank 100 in a single apparatus, and arranging a micro-low gravity environment simulation module 200 in the vacuum tank 100, when the structural service performance of the test sample made of inorganic non-metallic material is tested, by firstly inputting the standard temperature value, standard vacuum degree and standard micro-low gravity acceleration value required for the test into the control system, the control system can control the micro-low gravity environment simulation module 200 to drive the test sample made of inorganic non-metallic material to rotate around the axial direction at the first standard rotational speed while driving the test sample made of inorganic non-metallic material to rotate around the first direction at the second standard rotational speed according to the standard micro-low gravity acceleration value. The resultant vector of rotational speed synthesized by the first standard rotational speed and the second standard rotational speed makes the acceleration vector that the test sample made of inorganic non-metallic material is subjected to (i.e., the standard micro-low gravity acceleration value) have a magnitude less than the gravity acceleration. The magnitude of the acceleration vector that the test sample made of inorganic non-metallic material is subjected to can be changed by changing the first standard rotational speed and the second standard rotational speed, thereby realizing the simulation of more micro-low gravity environments, meeting the test requirements for different space environments, and improving the applicability of the test. Moreover, in the process of keeping the test sample made of inorganic non-metallic material placed in the required micro-low gravity environment, not only can the vacuum degree inside the vacuum tank 100 be adjusted by the vacuum unit according to different input standard vacuum degrees, but also the internal temperature of the vacuum tank 100 can be adjusted by the first temperature regulating mechanism and the second temperature regulating mechanism cooperatively according to different input standard temperature values, so that the comprehensive environment for testing of the test sample made of inorganic non-metallic material in a space with alternating high/low temperature, different vacuum degrees and different micro-low gravity factors can be simulated in a single apparatus, thus saving cost and occupying less space.

It can be understood that the step of driving the test sample made of inorganic non-metallic material to rotate around the axial direction at a first standard rotational speed and driving the test sample made of inorganic non-metallic material to rotate around the first direction at a second standard rotational speed by the micro-low gravity environment simulation module 200 according to the standard micro-low gravity acceleration value specifically comprises:

comparing the Earth's gravity acceleration to the standard micro-low gravity acceleration to obtain a total acceleration to be generated during the rotational motion of the test sample made of inorganic non-metallic material around the axial direction and around the first direction;

obtaining a rotation radius of the test sample made of inorganic non-metallic material rotating around the axial direction and a rotation radius of the test sample made of inorganic non-metallic material rotating around the first direction;

performing decomposition calculation to obtain the first standard rotational speed around the axial direction and the second standard rotational speed around the first direction according to the total acceleration to be generated, the rotation radius of the test sample made of inorganic non-metallic material rotating around the axial direction and the rotation radius of the test sample made of inorganic non-metallic material rotating around the first direction; and

driving the test sample made of inorganic non-metallic material to rotate around the axial direction at the first standard rotational speed by the first driving assembly and simultaneously driving the test sample made of inorganic non-metallic material to rotate around the first direction at the second standard rotational speed by the second driving assembly.

Although embodiments of the present invention have been described with reference to the accompanying drawings, various modifications and variations can be made by those skilled in the art without departing from the spirit and scope of the present invention, and such modifications and variations all fall within the scope defined by the present invention.

**Claims**

1. A comprehensive environment simulation test apparatus, **characterized by** comprising:

   a vacuum tank (100), wherein one end of the vacuum tank (100) is provided with an opening, and a sealing door (110) is provided at the opening in an openable and closable manner;
   a vacuum unit for adjusting a vacuum degree inside the vacuum tank (100);
   a first temperature regulating mechanism for increasing an internal temperature of the vacuum tank (100);
   a second temperature regulating mechanism for reducing the internal temperature of the vacuum tank (100);
   a micro-low gravity environment simulation module (200) arranged in the vacuum tank (100), wherein the micro-low gravity environment simulation module (200) is configured to carry a test sample and drive the test sample to rotate around an axial direction and rotate around a first direction, the first direction and the axial direction are perpendicular to each other and located in the same horizontal plane; a control system electrically connected to the vacuum unit, the first temperature regulating mechanism, the second temperature regulating mechanism, and the micro-low gravity environment simulation module (200).

2. The comprehensive environment simulation test apparatus according to claim 1, **characterized in that** a wall thickness of the vacuum tank (100) is 1.2 times a first calculated wall thickness, and the first calculated wall thickness satisfies the following formula:

$$S_1 = 1.25 D_B \left( \frac{P}{E} \cdot \frac{L}{D_B} \right)^{0.4}$$

where $S_1$ is the first calculated wall thickness, $D_B$ is an inner diameter of the vacuum tank (100), P is a designed external pressure of the vacuum tank (100), E is an elastic modulus of the material of the vacuum tank (100), and L is a calculated length of the vacuum tank (100).

3. The comprehensive environment simulation test apparatus according to claim 2, **characterized in that** the sealing door (110) is provided as an elliptical sealing head, wherein one end of the sealing door (110) in a closed state facing the vacuum tank (100) is provided as a cylindrical straight section, and the other end of the sealing door (100) is provided as a revolving elliptical surface, and a wall thickness of the sealing door (110) is 1.84 times a second calculated wall thickness, and the second calculated wall thickness satisfies the following formula:

$$S_2 = \frac{1.7 P D_c}{4[\sigma]\gamma - P} \cdot \frac{D_c}{2h_c} + C$$

where $S_2$ is the second calculated wall thickness, P is the designed external pressure of the vacuum tank (100), $D_c$ is an inner diameter of the cylindrical straight section, $[\sigma]$ is an allowable stress of the material of the sealing door (110), $\gamma$ is a weld coefficient, $h_c$ is an inner edge height of a protruding part of the sealing door (110), and C is a constant.

4. The comprehensive environment simulation test apparatus according to claim 3, **characterized in that** the inner wall of the vacuum tank (100) is provided with a plurality of reinforcing ribs (120) at intervals in the axial direction, and each of the reinforcing ribs (120) is arranged along a circumference of the inner wall of the vacuum tank (100).

**5.** The comprehensive environment simulation test apparatus according to claim 1, **characterized in that** the micro-low gravity environment simulation module (200) comprises a first frame (210), a second frame (220) is rotatably connected to the first frame (210), and the second frame (220) is configured to be driven to rotate around the axial direction by a first driving assembly; a clamping member (230) is rotatably connected to the second frame (220), the clamping member (230) is configured to be driven to rotate around the first direction by a second driving assembly, and the clamping member (230) is configured to clamp and fix the test sample.

**6.** The comprehensive environment simulation test apparatus according to claim 5, **characterized in that** the first driving assembly comprises a first motor (241) arranged along a second direction on the first frame (210), an output end of the first motor (241) is connected with a first worm gear reducer (242), and an output end of the first worm gear reducer (242) is coaxially connected to the second frame (220); any two of the axial direction, the first direction and the second direction are perpendicular to each other; and/or the second driving assembly comprises a second motor (251) arranged along a second direction on the second frame (220), an output end of the second motor (251) is connected with a second worm gear reducer (252), and an output end of the second worm gear reducer (252) is coaxially connected to the clamping member (230); any two of the axial direction, the first direction and the second direction are perpendicular to each other.

**7.** The comprehensive environment simulation test apparatus according to claim 5 or 6, **characterized in that** the second frame (220) is provided with a first speed sensor, and the first speed sensor is configured to detect a speed of rotation of the second frame (220) around the axial direction to obtain a first speed and transmit the first speed to the control system; the control system is configured to compare the first speed with a first standard rotational speed to obtain a first offset value, correct a working power of the first driving assembly according to the first offset value, and control the rotation of the first driving assembly according to the corrected working power of the first driving assembly; the clamping member (230) is provided with a second speed sensor configured to detect a speed of rotation of the clamping member (230) around the first direction to obtain a second speed and transmit the second speed to the control system; the control system is configured to compare the second speed with a second standard rotational speed to obtain a second offset value, correct a working power of the second driving assembly according to the second offset value, and control the rotation of the second driving assembly according to the corrected working power of the second driving assembly; and/or the apparatus further comprises a force sensor configured to detect a first gravity value that the test sample is subjected to and transmit the first gravity value to the control system; the control system is configured to compare the first gravity value with a standard micro-low gravity value to obtain a gravity offset value, perform decomposition calculation to obtain a first component compensation rotational speed around the axial direction and a second component compensation rotational speed around the first direction according to the gravity offset value, correct a working power of the first driving assembly according to the first component compensation rotational speed, control the rotation of the first driving assembly according to the corrected working power of the first driving assembly, correct a working power of the second driving assembly according to the second component compensation rotational speed, and control the rotation of the second driving assembly according to the corrected working power of the second driving assembly.

**8.** The comprehensive environment simulation test apparatus according to claim 1, **characterized in that** the first temperature regulating mechanism comprises an infrared thermal cage (410) circumferentially arranged in the vacuum tank (100), and the micro-low gravity environment simulation module (200) is arranged in the infrared thermal cage (410); and/or the second temperature regulating mechanism comprises a first heat sink module (310), a second heat sink module (320), and a liquid nitrogen module, wherein the first heat sink module (310) is arranged on a surrounding wall of the vacuum tank (100), the liquid nitrogen module is connected to a first pipeline of the first heat sink module (310) and is configured to supply liquid nitrogen to the first pipeline; the second heat sink module (320) is arranged on the sealing door (110), the liquid nitrogen module is connected to a second pipeline of the second heat sink module (320) and is configured to supply liquid nitrogen to the second pipeline.

**9.** The comprehensive environment simulation test apparatus according to claim 1, further comprising a cabinet (500), wherein the vacuum unit is arranged in the cabinet (500), one end of the cabinet (500) along the axial direction is provided with a protruding base (510), the vacuum tank (100) is arranged on top of the base (510), and the projection of the vacuum tank (100) in the axial direction falls within the range of the cabinet (500); and/or the vacuum unit comprises a vacuum pump in communication with the interior of the vacuum tank (100) through a third pipeline.

**10.** A test method applied to the test apparatus according to any one of claims 1 to 9, **characterized in that** the test method comprises the following steps:

installing and fixing the test sample to be tested onto the micro-low gravity environment simulation module (200) and closing the sealing door (110);

inputting a standard temperature value, a standard vacuum degree and a standard micro-low gravity acceleration value required for a test into the control system;

adjusting a test temperature inside the vacuum tank (100) by the first temperature regulating mechanism or the second temperature regulating mechanism according to the standard temperature value;

adjusting an internal vacuum degree of the vacuum tank (100) by the vacuum unit according to the standard vacuum degree;

driving the test sample to rotate around the axial direction at a first standard rotational speed and driving the test sample made of inorganic non-metallic material to rotate around the first direction at a second standard rotational speed by the micro-low gravity environment simulation module (200) according to the standard micro-low gravity acceleration value.

second direction

first direction

axial direction

100

200

410

110

111

500

510

FIG. 1

FIG. 2

FIG. 3

FIG. 4

FIG. 5

FIG. 6

120

FIG. 7

**EUROPEAN SEARCH REPORT**

Application Number

EP 25 19 8194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 084 030 A (XIAN INST OPTICS & PREC MECHANICS CAS) 1 May 2020 (2020-05-01) * paragraph [0029]; figures 1, 2 * * paragraph [0058] * ----- | 1-10 | INV. G01N17/00 B01L1/02 B64G7/00 |
| A | CN 117 606 770 A (BEIJING INST SPACECRAFT ENVIRONMENT ENGINEERING) 27 February 2024 (2024-02-27) * paragraph [0008] - paragraph [0046]; figures 1-3 * ----- | 1-10 | |

TECHNICAL FIELDS
SEARCHED      (IPC)

G01N
B64G
B01L

The present search report has been drawn up for all claims

| Place of search | Date of completion of the search | Examiner |
|---|---|---|
| The Hague | 20 January 2026 | Stavroulakis, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 741 803 A1**

## ANNEX TO THE EUROPEAN SEARCH REPORT
## ON EUROPEAN PATENT APPLICATION NO.

EP 25 19 8194

20-01-2026

| Patent document cited in search report | Publication date | Patent family member(s) | Publication date |
|---|---|---|---|
| CN 111084030 A | 01-05-2020 | NONE | |
| CN 117606770 A | 27-02-2024 | NONE | |